(19)

Europäisches Patentamt
European Patent Office
Office européen des brevets

(11)  **EP 4 512 932 A1**

(12)  **EUROPEAN PATENT APPLICATION**
published in accordance with Art. 153(4) EPC

(43) Date of publication:
**26.02.2025  Bulletin 2025/09**

(21) Application number: **23906390.2**

(22) Date of filing: **14.09.2023**

(51) International Patent Classification (IPC):
**C25B 1/042** (2021.01)  **C25B 9/00** (2021.01)
**C25B 15/021** (2021.01)

(52) Cooperative Patent Classification (CPC):
**C25B 1/042; C25B 9/00; C25B 15/021;**
**C25B 15/027;** Y02E 60/36

(86) International application number:
**PCT/JP2023/033508**

(87) International publication number:
**WO 2024/135014 (27.06.2024 Gazette 2024/26)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:  **23.12.2022  JP 2022206956**

(71) Applicant: **Mitsubishi Heavy Industries, Ltd.**
**Tokyo 100-8332 (JP)**

(72) Inventors:
• **MATSUO, Takeshi**
  **Tokyo 100-8332 (JP)**
• **ASANO, Koji**
  **Tokyo 100-8332 (JP)**

• **NAKAGIRI, Motohiro**
  **Tokyo 100-8332 (JP)**
• **KOSHIRO, Ikumasa**
  **Tokyo 100-8332 (JP)**
• **HARA, Nobuhide**
  **Tokyo 100-8332 (JP)**
• **KATTA, Masafumi**
  **Tokyo 100-8332 (JP)**
• **SHIMADA, Hiroyuki**
  **Nagoya-shi, Aichi 463-8560 (JP)**
• **MIZUTANI, Yasunobu**
  **Nagoya-shi, Aichi 463-8560 (JP)**
• **SHIN, Woosuck**
  **Nagoya-shi, Aichi 463-8560 (JP)**

(74) Representative: **Cabinet Beau de Loménie**
  **158, rue de l'Université**
  **75340 Paris Cedex 07 (FR)**

(54)  **HYDROGEN PRODUCTION SYSTEM AND HYDROGEN PRODUCTION METHOD**

(57)  A hydrogen production system and a hydrogen production method includes: a heat exchanger that heats steam by using a heating medium heated by thermal energy at 600°C or higher; a high-temperature steam electrolysis device that electrolyzes steam at 600°C or higher to produce hydrogen by applying, to a high-temperature steam electrolysis cell, a voltage lower than an electric potential at a thermal neutral point at which Joule heating caused by application of a current and heat absorption caused by electrolysis reaction are balanced; and a heating device that heats the high-temperature steam electrolysis device by the steam.

FIG.1

EP 4 512 932 A1

**Description**

Field

The present disclosure relates to a hydrogen production system and a hydrogen production method.

Background

As one of hydrogen production techniques, there has been known a high-temperature steam electrolysis method. The electrolysis method is advantageous in that raw materials are inexpensive and carbon dioxide ($CO_2$) is not generated in a hydrogen production process. However, in the electrolysis method, hydrogen is generated by electrolysis, so that there is the problem that cost of electric energy is high. Thus, considered is a high-temperature steam electrolysis method for reducing electric energy required for electrolysis by electrolyzing high-temperature steam at 700°C or higher.

However, it is difficult to generate high-temperature steam at 700°C or higher, and in the related art, a temperature of water is raised by a boiler, an electric furnace, or the like to generate steam, and the steam is electrolyzed to generate hydrogen. Additionally, electrolysis of water is endothermic reaction, so that 286 kilojoule of heat needs to be supplied from the outside to electrolyze 1 mole of water. Thus, the steam is electrolyzed at 700°C to 900°C while compensating for heat absorption and sensible heat of the steam at the time of electrolysis of water by Joule heat of a high-temperature steam electrolysis cell. Such a conventional hydrogen production device is disclosed in the following Patent Literature 1, for example.

Citation List

Patent Literature

Patent Literature 1: Japanese Patent Application Laid-open No. 2020-041202 Summary

Technical Problem

With a hydrogen production device using a high-temperature steam electrolysis method, electric energy required for electrolysis of water can be reduced by using high-temperature steam. However, actually, in the conventional hydrogen production device, generation energy of high-temperature steam at a temperature corresponding to an operating temperature of electrolysis of water is covered by required electric energy, and endothermic reaction of electrolysis of water is also covered by the electric energy. That is, the conventional high-temperature steam electrolysis cell is operated at an electric potential of a thermal neutral point at which heat absorption of electrolysis of water and heat generation of the water electrolysis cell are balanced, or an electric potential equal to or higher than the electric potential at the thermal neutral point, so that a large amount of electric energy is consumed. Most of the cost of hydrogen production by a high-temperature steam electrolysis method is electric power, so that, if most of the electric power can be covered by renewable energy, carbon dioxide can be reduced. However, supply of electric power of renewable energy is unstable, so that it is difficult to apply the renewable energy to large-scale and stable hydrogen production. On the other hand, electric energy generated by a thermal power generation system is accompanied by generation of carbon dioxide.

The present disclosure solves the problem described above, and an object thereof is to provide a hydrogen production system and a hydrogen production method for reducing the cost of electric energy at the time of producing hydrogen, and suppressing generation of carbon dioxide.

Solution to Problem

In order to achieve the above object, a hydrogen production system according to the present disclosure includes: a heat exchanger that heats, when a heating medium is heated by thermal energy at 600°C or higher, steam by using the heated heating medium: and a high-temperature steam electrolysis device that electrolyzes the steam at 600°C or higher to produce hydrogen by applying, to a high-temperature steam electrolysis cell, a voltage lower than a voltage at a thermal neutral point at which Joule heating caused by application of a current and heat absorption caused by electrolysis reaction are balanced such that heat balance becomes 0.

A hydrogen production method according to the present disclosure includes the steps of generating thermal energy at 600°C or higher, superheating steam to 600°C or higher by using a heating medium heated by the thermal energy, heating a high-temperature steam electrolysis cell by this steam, and electrolyzing the steam to produce hydrogen by applying, to the high-temperature steam electrolysis cell, a voltage lower than a voltage at a thermal neutral point at which Joule heating caused by application of a current and heat absorption caused by electrolysis reaction are balanced such that heat balance becomes 0.

Advantageous Effects of Invention

With the hydrogen production system and the hydrogen production method according to the present disclosure, the cost of electric energy at the time of producing hydrogen can be reduced, and generation of carbon dioxide can be suppressed.

Brief Description of Drawings

FIG. 1 is a schematic configuration diagram representing a hydrogen production system according to a first embodiment.
FIG. 2 is a graph representing a relation between voltage and thermal energy in a high-temperature steam electrolysis device.
FIG. 3 is a graph representing a change of a temperature in a high-temperature steam electrolysis cell when being shifted from no-load operation to 1.1 V operation, which is lower than an electric potential at a thermal neutral point, in the high-temperature steam electrolysis device.
FIG. 4 is a graph representing a change of voltage in the high-temperature steam electrolysis cell when being shifted from no-load operation to 1.1 V operation, which is lower than the electric potential at the thermal neutral point, in the high-temperature steam electrolysis device.
FIG. 5 is a graph representing a change of a current flowing in the high-temperature steam electrolysis cell at the time of changing a condition for a fluid to an air electrode in the high-temperature steam electrolysis device.
FIG. 6 is a table representing OCV with respect to a steam utilization rate in the high-temperature steam electrolysis device, and a relation of a potential difference between the OCV and 1.1 V, which is a voltage lower than the electric potential at the thermal neutral point, for example.
FIG. 7 is a graph representing a change of a current at the time of changing concentration of steam supplied to a hydrogen electrode of the high-temperature steam electrolysis device.
FIG. 8 is a schematic configuration diagram representing a hydrogen production system according to a second embodiment.
FIG. 9 is a schematic configuration diagram representing a hydrogen production system according to a third embodiment.

Description of Embodiments

The following describes preferred embodiments of the present disclosure in detail with reference to the drawings. The present disclosure is not limited to the embodiments. In a case in which there are a plurality of embodiments, a combination of the embodiments is also encompassed by the present disclosure. Constituent elements in the embodiments include a constituent element that is easily conceivable by those skilled in the art, substantially the same constituent element, and what is called an equivalent.

[First embodiment]

<Hydrogen production system>

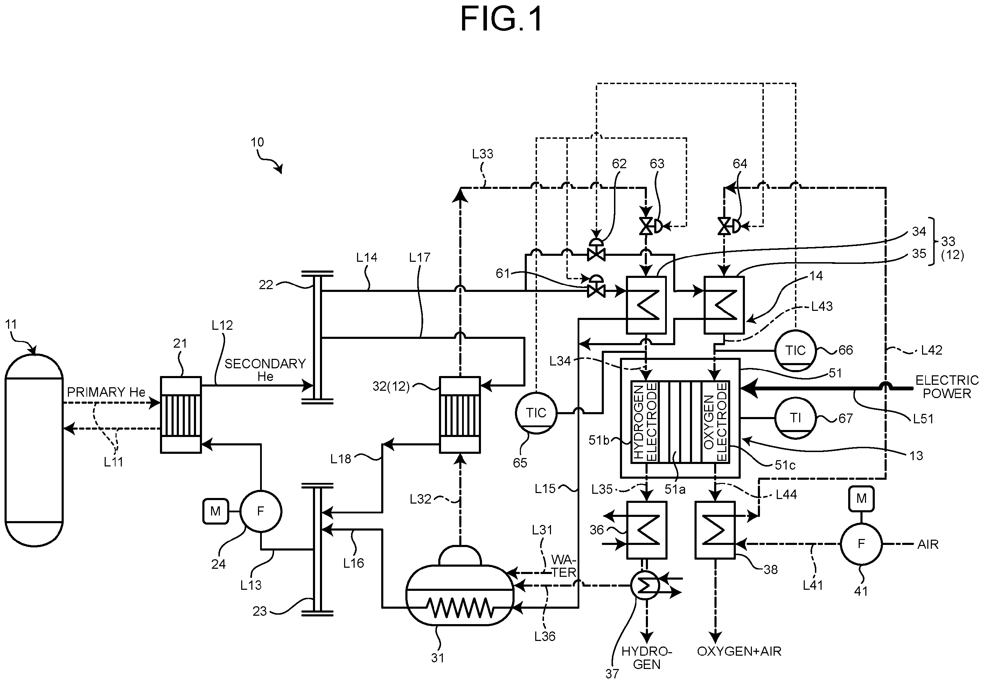

FIG. 1 is a schematic configuration diagram representing a hydrogen production system according to a first embodiment.
In the first embodiment, as illustrated in FIG. 1, a hydrogen production system 10 includes a heat source 11, a heat exchanger 12, a Solid Oxide Electrolysis Cell (SOEC) 13, and a heating device 14.
The heat source 11 is a high-temperature gas cooled reactor, and can generate thermal energy at 900°C or higher. The heat source 11 is not limited to the high-temperature gas cooled reactor, and may be any heat source that can generate thermal energy at 600°C or higher. As the heat source, for example, an electric furnace, a heliostat type solar heat collecting device, a boiler and exhausted heat of the boiler, exhausted heat of a gas turbine, and the like may be applied.
The high-temperature gas cooled reactor as the heat source 11 is a nuclear reactor that uses a ceramics material for cladding of fuel, helium for a coolant, and graphite for a moderator. The high-temperature gas cooled reactor can generate a helium gas as a heating medium at 900°C or higher. The high-temperature gas cooled reactor as the heat source 11 is coupled to a circulation path L11. The circulation path L11 is also coupled to an intermediate heat exchanger 21 in addition to the heat source 11. The intermediate heat exchanger 21 is coupled to one end part of a supply path L12 and one end part of a return path L13.

The intermediate heat exchanger 21 performs heat exchange between primary helium (a primary heating medium) flowing in the circulation path L11 and secondary helium (a secondary heating medium) flowing in the supply path L12 and the return path L13. That is, the intermediate heat exchanger 21 heats the secondary helium flowing in the supply path L12 and the return path L13 to 900°C, for example, by the primary helium at 950°C flowing in the circulation path L11, for example.

The other end part of the supply path L12 is coupled to a supply header 22. The other end part of the return path L13 is coupled to a return header 23. A circulator 24 is disposed on the return path L13. The hydrogen production system 10 produces hydrogen by using the secondary helium as a heating medium that is heated by thermal energy at 900°C or higher generated in the heat source 11.

The high-temperature steam electrolysis device 13 produces hydrogen by water electrolysis at a high temperature of about 700°C to 900°C using a high-temperature steam electrolysis cell 51 as a solid oxide electrolysis cell. The high-temperature steam electrolysis device 13 includes an electrolyte layer 51a, a porous hydrogen electrode layer 51b, and a porous oxygen electrode layer 51c.

A steam generator 31 heats water by thermal energy of the secondary helium to generate steam. The steam generator 31 is coupled to a water supply path L31, and also coupled to one end part of a first steam supply path L32. The heat exchanger 12 includes a first heat exchanger 32 and a second heat exchanger 33. The second heat exchanger 33 includes a heat exchanger 34 on the hydrogen side and a heat exchanger 35 on the oxygen side. The first heat exchanger 32 is coupled to the other end part of the first steam supply path L32, and also coupled to one end part of a second steam supply path L33. The other end part of the second steam supply path L33 is coupled to the heat exchanger 34 on the hydrogen side. The heat exchanger 34 on the hydrogen side is coupled to one end part of a steam supply path L34 on the hydrogen side.

The first heat exchanger 32 superheats steam by the thermal energy of the secondary helium to generate superheated steam. The heat exchanger 34 on the hydrogen side constituting the second heat exchanger 33 further superheats the superheated steam by the thermal energy of the secondary helium. The heat exchanger 35 on the oxygen side constituting the second heat exchanger 33 further heats the heated air by the thermal energy of the secondary helium. On the steam supply paths L32 and L33, the first heat exchanger 32 is disposed on an upstream side in a flowing direction of the steam, and the second heat exchanger 33 is disposed on a downstream side with respect to the first heat exchanger 32. The heat exchanger 34 on the hydrogen side and the heat exchanger 35 on the oxygen side each serving as the second heat exchanger 33 are disposed to be adjacent to each other. High-temperature steam is supplied from the heat exchanger 34 on the hydrogen side and the heat exchanger 35 on the oxygen side to the porous hydrogen electrode layer 51b and the porous oxygen electrode layer 51c of the high-temperature steam electrolysis cell, so that heat radiation can be reduced by disposing them to be adjacent to each other. The heat exchanger 34 on the hydrogen side superheats the superheated steam by the thermal energy of the secondary helium, and the heat exchanger 35 on the oxygen side heats the heated air by the thermal energy of the secondary helium.

In the high-temperature steam electrolysis device 13, the high-temperature steam electrolysis cell 51 is coupled to the other end parts of the steam supply path L34 on the hydrogen side and a steam supply path L43 on the oxygen side. The steam supply path L34 on the hydrogen side is coupled to an inlet side of the porous hydrogen electrode layer 51b, and the steam supply path L43 on the oxygen side is coupled to an inlet side of the porous oxygen electrode layer 51c. The porous hydrogen electrode layer 51b is heated by the superheated steam supplied from the steam supply path L34 on the hydrogen side. The high-temperature steam electrolysis device 13 is coupled to a hydrogen gas discharge path L35 and an oxygen gas discharge path L44. In the high-temperature steam electrolysis device 13, the hydrogen gas discharge path L35 is coupled to an outlet side of the porous hydrogen electrode layer 51b, and the oxygen gas discharge path L44 is coupled to an outlet side of the porous oxygen electrode layer 51c. A heat recovery unit 36 and a capacitor 37 are disposed on the hydrogen gas discharge path L35. The heat recovery unit 36 recovers heat of generated hydrogen, for example, and heats the steam flowing in the first steam supply path L32. The heat recovery unit 38 recovers heat of generated oxygen, and heats the air. The capacitor 37 cools excess steam discharged from the high-temperature steam electrolysis cell 51 together with hydrogen, and makes the steam into water. The hydrogen is generated in the porous hydrogen electrode layer 51b of the high-temperature steam electrolysis cell 51, so that the steam is separated from the hydrogen when the steam is condensed by the capacitor 37, and high-purity hydrogen is refined. The water generated in the capacitor 37 is returned to the steam generator 31 via the circulation path L36.

The heat recovery unit 38 is coupled to one end part of a gas supply path L41. The other end part of the gas supply path L41 is opened to the atmosphere. A circulator 41 is disposed on the gas supply path L41. The heat recovery unit 38 is coupled to the heat exchanger 35 on the oxygen side via a gas supply path L42. When the circulator 41 is driven, gas (air) is supplied to the heat recovery unit 38 via the gas supply path L41, and heated by gas flowing in the oxygen gas discharge path L44. The heated gas is further heated by the heat exchanger 35 on the oxygen side via the gas supply path L42, and supplied to the porous oxygen electrode layer 51c. The heated gas is supplied to and heats the porous oxygen electrode layer 51c, and generated oxygen is discharged to the oxygen gas discharge path L44.

The high-temperature steam electrolysis device 13 is connected to a power supply path L51, and electric power (electric energy) can be supplied thereto from the outside. As described later in detail, a voltage lower than an electric potential at a thermal neutral point at which heat absorption and heat generation by Joule heat are balanced is applied to the high-temperature steam electrolysis device 13 via the power supply path L51, and the steam is electrolyzed to produce hydrogen.

The high-temperature steam electrolysis device 13 produces hydrogen by using the steam heated by the thermal energy of the secondary helium, and also using the electric energy supplied from the power supply path L51. The heating device 14 heats the high-temperature steam electrolysis cell 51 of the high-temperature steam electrolysis device 13 by using the steam superheated by the thermal energy of the secondary helium. As described later in detail, the heating device 14 compensates for thermal energy that is lost by endothermic reaction when the high-temperature steam electrolysis device 13 produces hydrogen by heating the high-temperature steam electrolysis device 13 by the superheated steam at a higher temperature than an operating temperature of the high-temperature steam electrolysis device 13.

The supply header 22 is coupled to the second heat exchanger 33 via the heating medium supply path L14. A downstream end part of the heating medium supply path L14 branches into two parts, one of them is coupled to the heat exchanger 34 on the hydrogen side, and the other one is coupled to the heat exchanger 35 on the oxygen side. The second heat exchanger 33 is coupled to the steam generator 31 via a heating medium supply path L15. An upstream end part of the heating medium supply path L15 branches into two parts, one of them is coupled to the heat exchanger 34 on the hydrogen side, and the other one is coupled to the heat exchanger 35 on the oxygen side. The steam generator 31 is coupled to the return header 23 via a heating medium supply path L16. That is, the secondary helium in the supply header 22 is supplied to the second heat exchanger 33 (the heat exchanger 34 on the hydrogen side, the heat exchanger 35 on the oxygen side) via the heating medium supply path L14 to heat the steam and the like, supplied from the second heat exchanger 33 to the steam generator 31 via the heating medium supply path L15 to heat water, and returned from the steam generator 31 to the return header 23 via the heating medium supply path L16.

The supply header 22 is coupled to the first heat exchanger 32 via a heating medium supply path L17. The first heat exchanger 32 is coupled to the return header 23 via a heating medium supply path L18. That is, the secondary helium in the supply header 22 is supplied to the first heat exchanger 32 via the heating medium supply path L17 to superheat the steam, and returned to the return header 23 via the heating medium supply path L18.

The heating device 14 is constituted of at least the heat exchanger 12 that heats the steam and the circulator 24. The heating device 14 is particularly constituted of the heat exchanger 34 on the hydrogen side and the heat exchanger 35 on the oxygen side each serving as the second heat exchanger 33. When the secondary helium is circulated by the circulator 24, the heating device 14 supplies the superheated steam and the like heated by the second heat exchanger 33 (the heat exchanger 34 on the hydrogen side, the heat exchanger 35 on the oxygen side) to the high-temperature steam electrolysis cell 51 (the porous hydrogen electrode layer 51b, the porous oxygen electrode layer 51c), and heats the high-temperature steam electrolysis cell 51.

In the high-temperature steam electrolysis cell 51, high-temperature superheated steam is supplied from the steam supply path L34 on the hydrogen side to the porous hydrogen electrode layer 51b. When electric power is supplied to the high-temperature steam electrolysis cell 51 from the power supply path L51, a voltage is applied to the porous hydrogen electrode layer 51b and the porous oxygen electrode layer 51c. When a voltage is applied to the high-temperature steam electrolysis cell 51, the steam is electrolyzed in the porous hydrogen electrode layer 51b, and hydrogen is generated. The generated hydrogen is discharged to the hydrogen gas discharge path L35. On the other hand, oxygen ions generated by electrolysis in the porous hydrogen electrode layer 51b pass through the electrolyte layer 51a, oxygen is generated in the porous oxygen electrode layer 51c, and the generated oxygen is discharged to the oxygen gas discharge path L44.

In the high-temperature steam electrolysis device 13, hydrogen and oxygen are generated based on electrolysis reaction in accordance with the following expression.

$$H_2O \rightarrow H_2 + 1/2O_2$$

One of the two branched parts of the heating medium supply path L14 is coupled to the heat exchanger 34 on the hydrogen side, and the other one is coupled to the heat exchanger 35 on the oxygen side. On the heating medium supply path L14, flow rate regulating valves 61 and 62 are disposed on respective branch pipes leading to the heat exchanger 34 on the hydrogen side and the heat exchanger 35 on the oxygen side, respectively. A flow rate regulating valve 63 is disposed on the second steam supply path L33, and a flow rate regulating valve 64 is disposed on the gas supply path L42. A temperature regulator 65 on the hydrogen side controls degrees of opening of the flow rate regulating valves 61 and 63 so that the temperature of the superheated steam (heating medium) flowing in the steam supply path L34 on the hydrogen side becomes a predetermined temperature. A temperature regulator 66 on the oxygen side controls degrees of opening of the flow rate regulating valves 62 and 64 so that the temperature of the heated gas (heating medium) flowing in the steam supply path L43 on the oxygen side becomes a predetermined temperature. A temperature sensor 67 measures the temperature of the high-temperature steam electrolysis cell 51, and outputs the temperature to the temperature regulator 65 on the hydrogen side and the temperature regulator 66 on the oxygen side. The temperature regulator 65 on the hydrogen side and the temperature regulator 66 on the oxygen side control degrees of opening of the flow rate regulating valves 61, 62, 63, and 64 based on the temperature of the high-temperature steam electrolysis cell 51 measured by the temperature sensor 67.

<Principle of hydrogen production method>

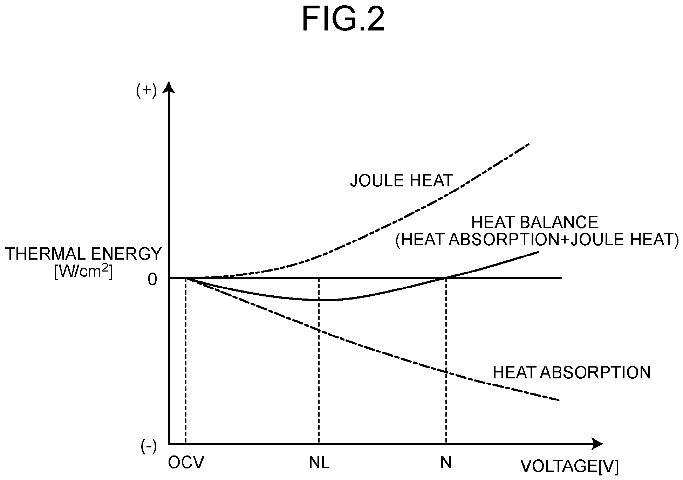

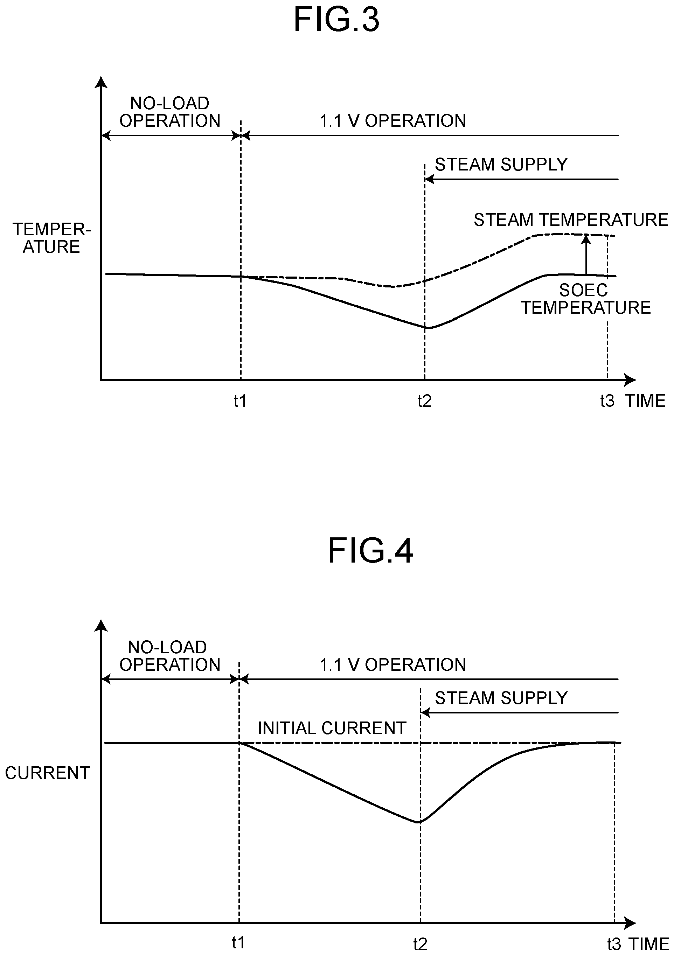

FIG. 2 is a graph representing a relation between the voltage and the thermal energy in the high-temperature steam electrolysis device, FIG. 3 is a graph representing a change of a temperature in the high-temperature steam electrolysis cell when being shifted from no-load operation to 1.1 V operation, which is lower than the electric potential at the thermal neutral point, in the high-temperature steam electrolysis device, and FIG. 4 is a graph representing a change of voltage in the high-temperature steam electrolysis cell when being shifted from no-load operation to 1.1 V operation, which is lower than the electric potential at the thermal neutral point, in the high-temperature steam electrolysis device.
The high-temperature steam electrolysis device 13 electrolyzes steam to generate hydrogen and oxygen by reverse reaction of a fuel battery (SOFC), which is reaction as represented by the following expressions (1), (2-1), and (2-2).

$$\Delta H = \Delta G + T\Delta S \tag{1}$$

$\Delta H$: enthalpy [kJ/mol]
$\Delta G$: Gibbs free energy [kJ/mol] (corresponding to electric energy)
$T\Delta S$: entropy [kJ/mol] (corresponding to thermal energy)

SOEC hydrogen electrode:

$$H_2O + 2e^- \rightarrow H_2 + O^{2-} \tag{2-1}$$

SOEC oxygen electrode:

$$O^{2-} \rightarrow 1/2O_2 + 2e^- \tag{2-2}$$

$$E = \Delta H/2F \tag{3}$$

F: Faraday constant

Electrolysis of water is endothermic reaction, so that a typical high-temperature steam electrolysis device operates at a voltage (electric potential) of 1.3 V or higher, which is equivalent to the electric potential at the thermal neutral point at which heat absorption and heat generation by Joule heat are balanced. The thermal neutral point is given by the expression (3) described above, and varies depending on enthalpy. The thermal neutral point at 800°C is about 1.29 V as a theoretical value, and heat loss is caused by heat radiation in an actual high-temperature steam electrolysis device. Thus, the actual high-temperature steam electrolysis device operates at a voltage higher than the electric potential at the thermal neutral point to balance heat generation and heat absorption. As a temperature of water becomes higher, the electric potential at the thermal neutral point becomes higher.
As illustrated in FIG. 2, heat absorption caused by high-temperature steam electrolysis is lowered as a primary function (proportional) in accordance with increasing voltage. Joule heating caused by electrolysis rises as a secondary function in accordance with increasing voltage. Thus, heat balance obtained by combining Joule heating and heat absorption is lowered in accordance with increasing voltage, and rises.
In conventional hydrogen production systems, the high-temperature heat source (high-temperature gas cooled reactor) 11 is not present, so that Joule heating caused in the high-temperature steam electrolysis device compensates for endothermic reaction at the time of electrolysis of water at an electric potential equal to or higher than the electric potential at the thermal neutral point. That is, conventional high-temperature steam electrolysis devices operate at a voltage equal to or higher than a thermal neutral point N.

On the other hand, the hydrogen production system 10 in the first embodiment includes the heat source (high-temperature gas cooled reactor) 11, so that the hydrogen production system 10 can compensate for endothermic reaction at the time of electrolysis of water by heating the steam and the high-temperature steam electrolysis device 13 (high-temperature steam electrolysis cell 51) using the high-temperature helium that is heated by thermal energy at 600°C or higher generated by the heat source 11. Thus, the hydrogen production system 10 operates at a voltage at an operating point NL equal to or lower than the thermal neutral point N. At the operating point NL, high-temperature heat is supplied from the heat source 11, so that it is possible to reduce electric energy used for electrolysis of water without converting electric energy into thermal energy (Joule heating) more than necessary.

Specifically, the hydrogen production system 10 electrolyzes the steam and produces the hydrogen by heating the high-temperature steam electrolysis device 15 by the steam at a higher temperature than an operating temperature of the high-temperature steam electrolysis device 15, and giving a voltage lower than the thermal neutral point at which heat generation and heat absorption are balanced to the high-temperature steam electrolysis device 13 (high-temperature steam electrolysis cell 51). That is, the heating device 14 compensates for thermal energy that is lost by endothermic reaction when the high-temperature steam electrolysis device 15 produces hydrogen.

Herein, the voltage lower than the thermal neutral point means a voltage in a range from a no-load voltage (OCV = Open circuit voltage) with respect to the high-temperature steam electrolysis device 15 to a voltage smaller than a voltage (N) at the thermal neutral point. Preferably, the voltage falls within a range from 1.0 V to 1.2 V.

That is, the hydrogen production system 10 reduces consumption of electric energy by supplying heat absorption represented by T△S in the expression (1) described above from the steam produced by the secondary helium in the heat source 11. That is, as illustrated in FIG. 3 and FIG. 4, when the high-temperature steam electrolysis device 15 is shifted from no-load operation to 1.1 V operation at time t1, the voltage of the high-temperature steam electrolysis device 15 is equal to or lower than the electric potential at the thermal neutral point, so that Joule heat consumed by electric resistance of the high-temperature steam electrolysis cell 51 is lowered. However, as the Joule heat of the high-temperature steam electrolysis cell 51 is lowered, heat absorption exceeds, so that the temperature of the high-temperature steam electrolysis cell 51 is lowered from the time t1 to time t2, a current flowing in the high-temperature steam electrolysis cell 51 is reduced (refer to FIG. 4), and a hydrogen production amount is lowered in proportion to the current flowing in the high-temperature steam electrolysis cell 51. FIG. 3 and FIG. 4 illustrate the embodiment in which no-load operation is shifted to 1.1 V operation. In a case of operating the high-temperature steam electrolysis device at an electric potential equal to or lower than the electric potential at the thermal neutral point, a steam temperature may be increased later as illustrated in FIG. 3, or steam at a higher temperature than the temperature of the high-temperature steam electrolysis device 13 may be supplied in advance.

Thus, at the time of operating the high-temperature steam electrolysis device 15 at a voltage equal to or lower than the thermal neutral point at which heat absorption becomes rich, the hydrogen production system 10 supplies, to the high-temperature steam electrolysis cell 51, steam at a higher temperature than the operating temperature of the high-temperature steam electrolysis cell 51 at the time t2. The high-temperature steam electrolysis cell 51 then operates to thermally compensate for heat absorption from the time t2 to time t3, lowering of the temperature of the high-temperature steam electrolysis cell 51 is suppressed, and the current flowing in the high-temperature steam electrolysis cell 51 returns to an initial current, so that lowering of the hydrogen production amount is suppressed. In the hydrogen production system 10 according to the first embodiment, as compared with the related art, energy for heat absorption corresponding to T△S of electric energy to be consumed is supplied from the heat source 11, so that electric energy consumed by the high-temperature steam electrolysis cell 51 is reduced.

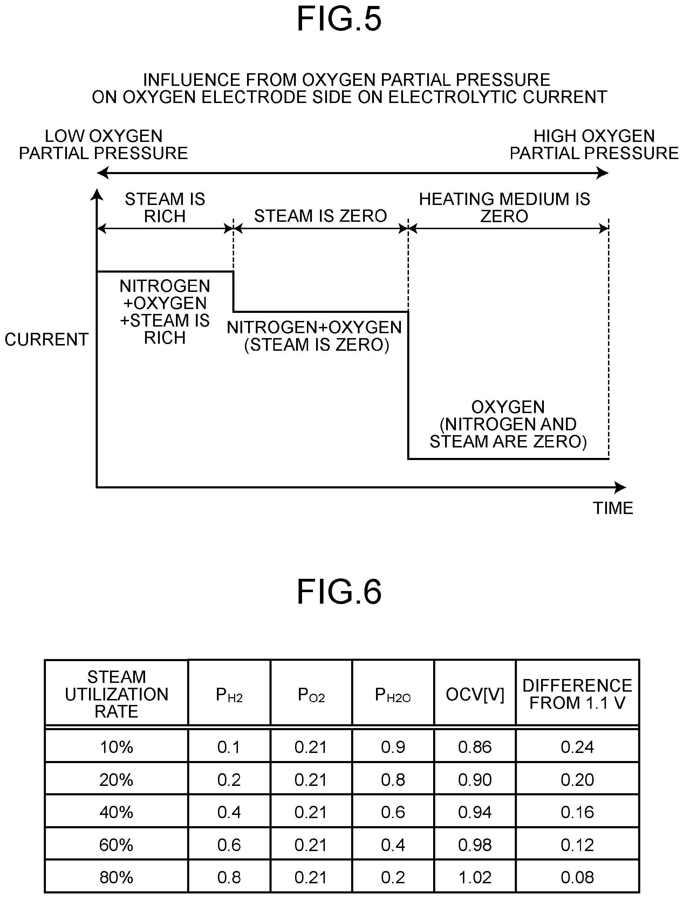

FIG. 5 is a graph representing a change of a current flowing in the high-temperature steam electrolysis cell at the time of changing a condition for a fluid to an air electrode in the high-temperature steam electrolysis device.

As described above, a typical hydrogen production system operates at a voltage equal to or higher than the electric potential at the thermal neutral point to cover heat absorption caused by self-heating of the high-temperature steam electrolysis cell itself by Joule heat caused by electric resistance, so that heat supply to an oxygen electrode is not required. Conventionally, air is supplied to the oxygen electrode of the high-temperature steam electrolysis cell. However, an object of supplying the air is not to supply heat but to discharge oxygen generated in the oxygen electrode of the high-temperature steam electrolysis cell.

In the hydrogen production system 10 in the first embodiment, heat absorption at the time of electrolysis of water needs to be compensated for by high-temperature steam and the like, and heat needs to be supplied to the oxygen electrode of the high-temperature steam electrolysis cell 51. This may be because, in the expression (2-2) described above, entropy is increased in reaction at the oxygen electrode, so that endothermic reaction at the oxygen electrode is large. Thus, the high-temperature steam electrolysis cell 51 operating at a voltage lower than the electric potential at the thermal neutral point actively supplies heat by supplying steam or air at a temperature equal to or higher than the operating temperature of the high-temperature steam electrolysis cell 51 to the oxygen electrode, and discharges oxygen generated on a surface of the oxygen electrode to lower oxygen partial pressure, so that a current is enabled to easily flow in accordance with the Nernst equation.

That is, as illustrated in FIG. 5, the current in the high-temperature steam electrolysis cell 51 varies depending on a type of a heating medium supplied to the oxygen electrode. For example, when the heating medium is superheated steam (steam is rich/steam, oxygen, nitrogen), the current becomes higher. On the other hand, when the heating medium is heated air (steam is zero/oxygen, nitrogen), the current becomes lower than the superheated steam. When there is no heating medium (heating medium is zero), the current becomes further lower than the heated air. FIG. 5 illustrates a change of an electrolytic current due to partial pressure of oxygen flowing on the oxygen electrode side. Oxygen partial pressure is low on a steam-rich side, and the heating medium is zero on a high-oxygen partial pressure side with only oxygen. In accordance with the Nernst equation of the expression (4), as the oxygen partial pressure becomes smaller, the potential also becomes smaller, so that a potential difference from an electric potential applied to the high-temperature steam electrolysis cell becomes larger, and the electrolytic current becomes larger.

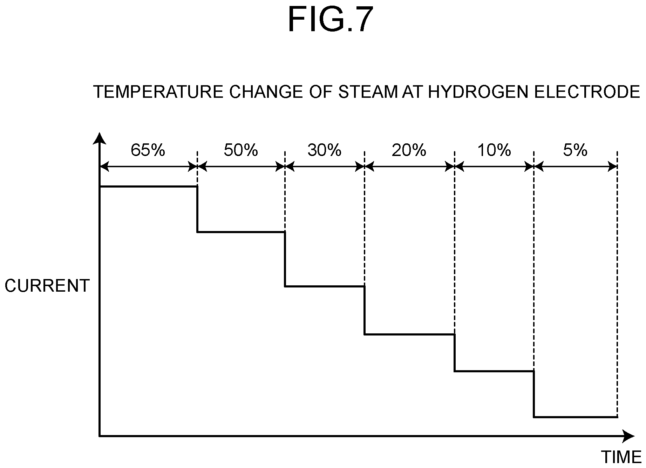

FIG. 6 is a table representing OCV with respect to a steam utilization rate in the high-temperature steam electrolysis device, and a relation of a potential difference between the OCV and 1.1 V, which is a voltage lower than the electric potential at the thermal neutral point, for example, and FIG. 7 is a graph representing a change of a current at the time of changing concentration of steam supplied to the hydrogen electrode of the high-temperature steam electrolysis device.

To lower energy to be supplied, a typical hydrogen production system aims at minimizing a steam amount supplied to the high-temperature steam electrolysis cell, and producing hydrogen with a minimum steam amount. In a typical hydrogen production system, a target steam utilization rate of the steam used for producing hydrogen with respect to supplied steam is equal to or higher than 80%.

On the other hand, with the hydrogen production system 10 in the first embodiment, a large amount of high-temperature heat can be supplied to the high-temperature steam electrolysis cell 51 by the heat source 11, so that the steam utilization rate is not required to be raised. Thus, the hydrogen production system 10 supplies, to the high-temperature steam electrolysis cell 51, steam having the number of moles equal to or larger than the number of moles required for producing hydrogen. In a case of supplying a large amount of steam to the high-temperature steam electrolysis cell 51, the OCV is lowered as steam partial pressure is increased in accordance with the Nernst equation of the following expression (4), a potential difference from the voltage applied to the high-temperature steam electrolysis cell 51 is increased, and an effect of enabling a current to easily flow is exhibited.

$$E = E_0 + RT/zF \cdot LN\ (aH_2 \times aO_2^{1/2}/aH_2O) \tag{4}$$

FIG. 6 summarizes a relation among the hydrogen partial pressure, the oxygen partial pressure, water partial pressure, and the OCV when the temperature of the steam supplied to the high-temperature steam electrolysis cell 51 is 750°C, and a potential difference between the OCV and 1.1 V in a case in which the voltage applied to the high-temperature steam electrolysis cell 51 is 1.1 V. As illustrated in FIG. 6, it can be found that the OCV is lowered as the steam utilization rate is lowered, so that the potential difference from the voltage of 1.1 V applied to the high-temperature steam electrolysis cell 51 is increased. The potential difference is increased, so that the current flowing in the high-temperature steam electrolysis cell 51 is also increased, and as a result, the hydrogen production amount is increased.

As illustrated in FIG. 7, as the concentration of the steam supplied to the hydrogen electrode of the high-temperature steam electrolysis cell 51 is lowered, the current is lowered. For example, when the steam concentration is 65% ($H_2O/(N_2 + H_2 + H_2O)$ : 65%), the current is high. When the steam concentration is lowered to be 50% ($H_2O/(N_2 + H_2 + H_2O)$ : 50%), 30% ($H_2O/(N_2 + H_2 + H_2O)$ : 30%), 20% ($H_2O/(N_2 + H_2 + H_2O)$ : 20%), 10% ($H_2O/(N_2 + H_2 + H_2O)$ : 10%), and 5% ($H_2O/(N_2 + H_2 + H_2O)$: 5%), the current is also lowered.

<Hydrogen production method>

A hydrogen production method according to the present embodiment includes a step of generating thermal energy at 600°C or higher, a step of superheating the steam to 600°C or higher by using the secondary helium (heating medium) heated by the thermal energy, a step of heating the high-temperature steam electrolysis cell 51 by using the steam, and a step of producing hydrogen by electrolyzing the steam by applying, to the high-temperature steam electrolysis cell 51, voltage lower than the electric potential at the thermal neutral point at which heat generation and heat absorption are balanced.

Specifically, as illustrated in FIG. 1, the high-temperature gas cooled reactor as the heat source 11 generates primary helium at 950°C, for example. The high-temperature primary helium flows through the circulation path L11, exchanges heat with the secondary helium flowing in the return path L13 in the intermediate heat exchanger 21, and heats the secondary helium to 890°C, for example. The secondary helium subjected to heat exchange in the intermediate heat exchanger 21 flows through the supply path L12 to be supplied to the supply header 22 at about 890°C, for example.

When the circulator 24 is driven, the high-temperature secondary helium circulates while being heated by the intermediate heat exchanger 21. The secondary helium in the supply header 22 is supplied to the second heat exchanger 33 via the heating medium supply path L14 to superheat the steam, and supplied from the second heat exchanger 33 to the steam generator 31 via the heating medium supply path L15. The steam generator 31 heats water supplied from the water supply path L31 and the like by the high-temperature secondary helium to generate steam. Additionally, the secondary helium in the supply header 22 is supplied to the first heat exchanger 32 via the heating medium supply path L17, and the first heat exchanger 32 superheats the steam supplied from the steam generator 31.

That is, the steam generator 31 heats water supplied from the water supply path L31 to 180°C to generate steam, for example. The steam is supplied to the first heat exchanger 32 via the first steam supply path L32, superheated to 600°C at this point, and supplied to the heat exchanger 34 on the hydrogen side via the second steam supply path L33. The steam is superheated to 850°C, for example, by the heat exchanger 34 on the hydrogen side, and supplied to the porous hydrogen electrode layer 51b of the high-temperature steam electrolysis cell 51 as the high-temperature steam at 850°C via the steam supply path L34 on the hydrogen side.

On the other hand, when the circulator 41 is driven, the gas (air) is supplied to the heat recovery unit 38 via the gas supply path L41, and the heat recovery unit 38 is heated by high-temperature oxygen and the like generated from the porous oxygen electrode layer 51c. The heated gas is supplied to the heat exchanger 35 on the oxygen side via the gas supply path L42. The gas is heated to 800°C, for example, by the heat exchanger 35 on the oxygen side, and supplied to the porous oxygen electrode layer 51c of the high-temperature steam electrolysis cell 51 as high-temperature gas at 800°C.

In the high-temperature steam electrolysis cell 51, the porous hydrogen electrode layer 51b is heated by the superheated steam supplied from the heat exchanger 34 on the hydrogen side, and the porous oxygen electrode layer 51c is heated by the high-temperature gas supplied from the heat exchanger 35 on the oxygen side. Additionally, voltage is applied to the high-temperature steam electrolysis cell 51 by electric power supplied from the power supply path L51, and the high-temperature steam electrolysis cell 51 electrolyzes the superheated steam supplied to the porous hydrogen electrode layer 51b to generate hydrogen and oxygen.

At this point, the high-temperature steam electrolysis cell 51 is heated at a higher temperature (for example, 800°C) than the operating temperature (for example, 750°C) of the high-temperature steam electrolysis cell 51 by the superheated steam and the heated gas. Additionally, electric power is supplied to the high-temperature steam electrolysis cell 51 from the power supply path L51, and voltage lower than the electric potential at the thermal neutral point, specifically, voltage in a range from 1.0 V to 1.2 V, is applied to the porous hydrogen electrode layer 51b and the porous oxygen electrode layer 51c. The superheated steam in the porous hydrogen electrode layer 51b is then electrolyzed in the porous hydrogen electrode layer 51b to generate hydrogen, and the generated hydrogen is discharged to the hydrogen gas discharge path L35. On the other hand, oxygen ions generated by electrolysis in the porous hydrogen electrode layer 51b pass through the electrolyte layer 51a, oxygen is generated in the porous oxygen electrode layer 51c, and the generated oxygen is discharged to the oxygen gas discharge path L44.

The steam having the number of moles equal to or larger than the number of moles required for producing hydrogen is supplied to the high-temperature steam electrolysis cell 51, so that the high-temperature steam electrolysis cell 51 discharges excess steam to the hydrogen gas discharge path L35 together with the generated hydrogen. The high-temperature steam electrolysis cell 51 discharges the supplied gas (air) together with the generated oxygen to the oxygen gas discharge path L44. The capacitor 37 cools the steam and the high-temperature gas to be made into water, and supplies the water to the steam generator 31 via the circulation path L36. The steam is condensed by the capacitor 37, so that purity of the hydrogen can be increased.

The heating device 14 needs to heat the high-temperature steam electrolysis cell 51 by the superheated steam and the heated gas at a higher temperature (for example, 800°C) than the operating temperature (for example, 750°C) of the high-temperature steam electrolysis cell 51. Thus, the temperature sensor 67 measures the temperature of the high-temperature steam electrolysis cell 51, and outputs the temperature to the temperature regulator 65 on the hydrogen side and the temperature regulator 66 on the oxygen side. The temperature regulator 65 on the hydrogen side controls degrees of opening of the flow rate regulating valves 61 and 63 so that the temperature of the steam flowing in the steam supply path L34 on the hydrogen side becomes 800°C or higher, for example. Additionally, the temperature regulator 66 on the oxygen side controls degrees of opening of the flow rate regulating valves 62 and 64 so that the temperature of the gas flowing in the steam supply path L43 on the oxygen side becomes 800°C or higher, for example.

Herein, the temperature of the steam flowing in the steam supply path L34 on the hydrogen side and the temperature of the gas flowing in the steam supply path L43 on the oxygen side are controlled so that the high-temperature steam electrolysis cell 51 reaches an assumed operating temperature (for example, 750°C), measured by the temperature sensor 67, and output to the temperature regulator 65 on the hydrogen side and the temperature regulator 66 on the oxygen side. By adjusting the degrees of opening of the flow rate regulating valves 61 and 63 and the flow rate regulating valves 62 and 64, the operating temperature of the high-temperature steam electrolysis cell 51 is controlled.

[Second embodiment]

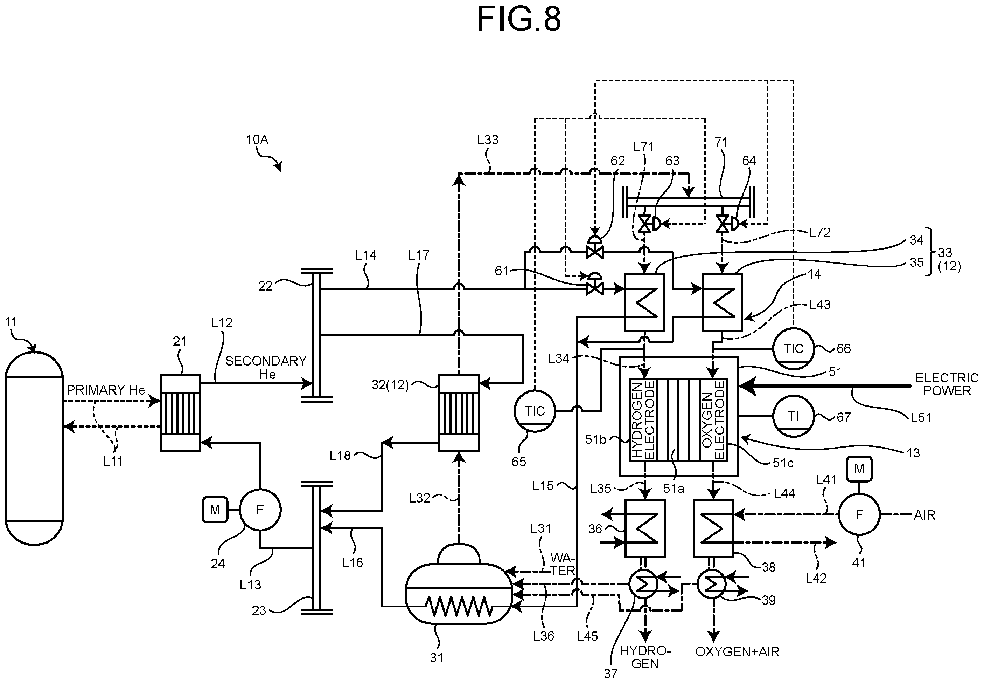

FIG. 8 is a schematic configuration diagram representing the hydrogen production system according to a second embodiment. A member having the same function as that in the first embodiment described above is denoted by the same reference numeral, and detailed description thereof will not be repeated.

As illustrated in FIG. 8, similarly to the first embodiment, a hydrogen production system 10A includes the heat source 11, the heat exchanger 12, the high-temperature steam electrolysis device 13, and the heating device 14. The hydrogen production system 10A in the second embodiment is obtained by changing a configuration of supplying the heating medium to the porous oxygen electrode layer 51c constituting the high-temperature steam electrolysis device 13 in the first embodiment.

The other end part of the second steam supply path L33 is coupled to a steam header 71. The steam header 71 is coupled to one end parts of a steam branch path L71 on the hydrogen side and a steam branch path L72 on the oxygen side. The heat exchanger 34 on the hydrogen side is coupled to the other end part of the steam branch path L71 on the hydrogen side, and also coupled to one end part of the hydrogen gas discharge path L35. The heat exchanger 35 on the oxygen side is coupled to the other end part of the steam branch path L72 on the oxygen side, and also coupled to one end part of the oxygen gas discharge path L44. The heat recovery unit 36 and the capacitor 37 are disposed on the hydrogen gas discharge path L35. The heat recovery unit 38 and a capacitor 39 are disposed on the oxygen gas discharge path L44. Water generated in the capacitors 37 and 39 is returned to the steam generator 31 via the circulation path L36 and a circulation path L45.

The first heat exchanger 32 superheats steam by the thermal energy of the secondary helium to generate superheated steam. The heat exchanger 34 on the hydrogen side of the second heat exchanger 33 further superheats the superheated steam by the thermal energy of the secondary helium. The heat exchanger 35 on the oxygen side of the second heat exchanger 33 further superheats the superheated steam by the thermal energy of the secondary helium. On the steam supply paths L32 and L33, the first heat exchanger 32 is disposed on an upstream side in a flowing direction of the steam, the steam header 71 is disposed on a downstream side with respect to the first heat exchanger 32, and the second heat exchanger 33 is disposed on a downstream side with respect to the steam header 71. The heat exchanger 34 on the hydrogen side and the heat exchanger 35 on the oxygen side each serving as the second heat exchanger 33 are disposed in parallel on a downstream side of the steam supply path L33.

In the high-temperature steam electrolysis device 13, the high-temperature steam electrolysis cell 51 is coupled to the other end parts of the hydrogen gas discharge path L35 and the oxygen gas discharge path L44. The hydrogen gas discharge path L35 is coupled to the inlet side of the porous hydrogen electrode layer 51b, and the oxygen gas discharge path L44 is coupled to the inlet side of the porous oxygen electrode layer 51c. Thus, the superheated steam is supplied to both of the porous hydrogen electrode layer 51b and the porous oxygen electrode layer 51c.

In the hydrogen production system 10A, the steam superheated by the first heat exchanger 32 is branched at the steam header 71, supplied to the heat exchanger 34 on the hydrogen side and the heat exchanger 35 on the oxygen side to be superheated, and supplied to the high-temperature steam electrolysis cell 51. Thus, the high-temperature steam electrolysis cell 51 is heated at a higher temperature (for example, 800°C) than the operating temperature (for example, 750°C) of the high-temperature steam electrolysis cell 51 by the superheated steam. With the hydrogen production system 10A, the system configuration can be simplified.

In the hydrogen production system 10A according to the present embodiment, the heating medium supplied to the heat exchanger 35 on the oxygen side is the superheated steam, so that the capacitor 39 is disposed on the downstream side of the heat recovery unit 38 unlike the first embodiment. The steam that is supplied together with the hydrogen generated from the porous hydrogen electrode layer 51b of the high-temperature steam electrolysis cell is discharged to the hydrogen gas discharge path L35, and the steam that is supplied together with the oxygen generated from the porous oxygen electrode layer 51c is discharged to the oxygen gas discharge path L44. By cooling and condensing the steam by the capacitors 37 and 39, purity of hydrogen and oxygen can be respectively increased. Particularly, high-purity oxygen can be recovered by the capacitor 39. Other configurations of the hydrogen production system 10A are the same as those of the hydrogen production system 10 in the first embodiment, so that description thereof will not be repeated.

[Third embodiment]

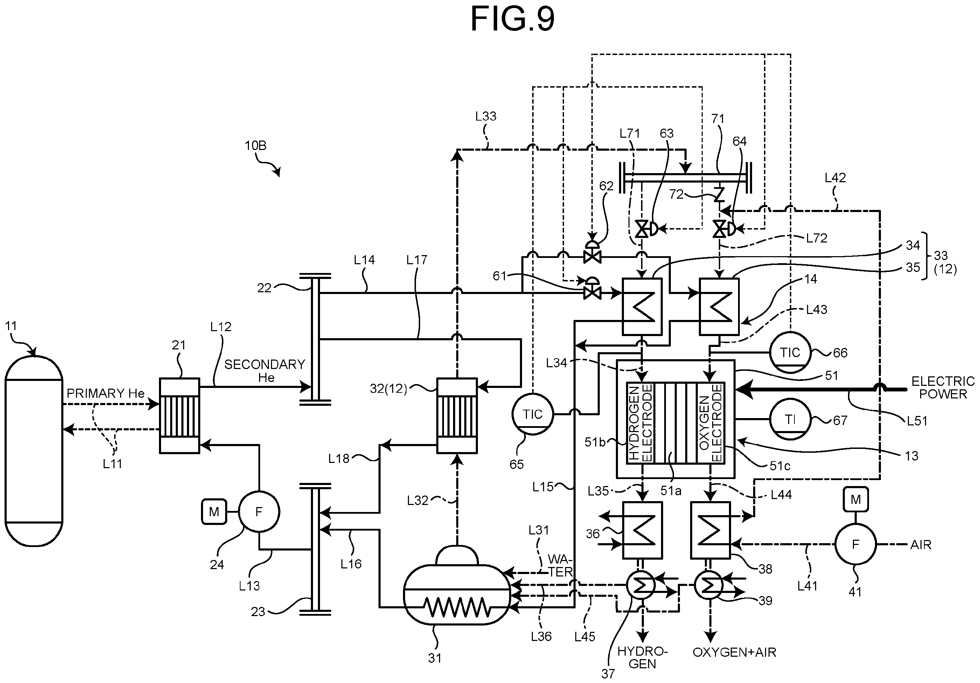

FIG. 9 is a schematic configuration diagram representing the hydrogen production system according to a third embodiment. A member having the same function as that in the first embodiment and the second embodiment described above is denoted by the same reference numeral, and detailed description thereof will not be repeated.

As illustrated in FIG. 9, similarly to the first embodiment, a hydrogen production system 10B includes the heat source 11, the heat exchanger 12, the high-temperature steam electrolysis device 13, and the heating device 14. The hydrogen production system 10B in the third embodiment is obtained by changing a configuration of supplying the heating medium to the porous oxygen electrode layer 51c constituting the high-temperature steam electrolysis device 13 in the first embodiment.

The other end part of the second steam supply path L33 is coupled to the steam header 71. The steam header 71 is coupled to one end parts of the steam branch path L71 on the hydrogen side and the steam branch path L72 on the oxygen side. The heat exchanger 34 on the hydrogen side is coupled to the other end part of the steam branch path L71 on the hydrogen side, and also coupled to one end part of the hydrogen gas discharge path L35. The heat exchanger 35 on the oxygen side is coupled to the other end part of the steam branch path L72 on the oxygen side, and also coupled to one end part of the oxygen gas discharge path L44. The other end part of the gas supply path L42 is coupled to the upper stream side of the steam branch path L72 on the oxygen side with respect to the flow rate regulating valve 64. On the upstream side with respect to a coupling part of the gas supply path L42 of the steam branch path L72 on the oxygen side, a check valve 72 is disposed. The check valve 72 prevents backflow of the heated air from the heat exchanger 35 on the oxygen side to the steam header 71.

In the high-temperature steam electrolysis device 13, the high-temperature steam electrolysis cell 51 is coupled to the other end parts of the hydrogen gas discharge path L35 and the oxygen gas discharge path L44. The hydrogen gas discharge path L35 is coupled to the inlet side of the porous hydrogen electrode layer 51b, and the oxygen gas discharge path L44 is coupled to the inlet side of the porous oxygen electrode layer 51c. Thus, the superheated steam is supplied to the porous hydrogen electrode layer 51b, and the superheated steam and the heated air are supplied to the porous oxygen electrode layer 51c.

In the hydrogen production system 10B, the steam superheated by the first heat exchanger 32 is branched at the steam header 71, supplied to the heat exchanger 34 on the hydrogen side and the heat exchanger 35 on the oxygen side to be superheated, and supplied to the high-temperature steam electrolysis cell 51. Additionally, gas (air) is supplied to the heat exchanger 35 on the oxygen side to be heated, and supplied to the porous oxygen electrode layer 51c of the high-temperature steam electrolysis cell 51. Thus, the high-temperature steam electrolysis cell 51 is heated at a higher temperature (for example, 800°C) than the operating temperature (for example, 750°C) of the high-temperature steam electrolysis cell 51 by the superheated steam and the heated gas.

Other configurations of the hydrogen production system 10B are the same as those of the hydrogen production system 10 in the first embodiment and the hydrogen production system 10A in the second embodiment, so that description thereof will not be repeated.

[Working effect of present embodiment]

The hydrogen production system according to a first aspect includes: the heat exchanger 12 that heats the steam by using the secondary helium (heating medium) heated by the thermal energy at 600°C or higher; the high-temperature steam electrolysis device 13 that produces hydrogen by applying, to the high-temperature steam electrolysis cell 51, voltage lower than the electric potential at the thermal neutral point at which Joule heating caused by application of a current and heat absorption caused by electrolysis reaction are balanced, and electrolyzing the steam at 600°C or higher; and the heating device 14 that heats the high-temperature steam electrolysis device 13 by the steam.

In the hydrogen production system according to the first aspect, the voltage lower than the electric potential at the thermal neutral point is applied to the high-temperature steam electrolysis cell 51 in the high-temperature steam electrolysis device 13, and the high-temperature steam electrolysis device 13 is heated by the steam that is heated by the secondary helium at 600°C or higher to produce hydrogen. Thus, it is possible to suppress generation of carbon dioxide by reducing a use amount of electric energy generated by a thermal power generation system and the like, and cost of electric energy at the time of producing hydrogen can be reduced.

The hydrogen production system according to a second aspect is the hydrogen production system according to the first aspect in which the heating device 14 further heats the high-temperature steam electrolysis device 15 by the steam at a higher temperature than the operating temperature of the high-temperature steam electrolysis device 15. Due to this, the high-temperature steam electrolysis cell 51 operates to thermally compensate for heat absorption, so that lowering of the temperature of the high-temperature steam electrolysis cell 51 can be suppressed, lowering of the current can be suppressed, and lowering of the hydrogen production amount can be suppressed. As a result, electric energy to be consumed can be reduced.

The hydrogen production system according to a third aspect is the hydrogen production system according to the first aspect or the second aspect in which the heating device 14 further compensates for thermal energy that is lost by endothermic reaction when the high-temperature steam electrolysis device 13 produces hydrogen. Due to this, it is possible to reduce a supply amount of thermal energy from the outside to the high-temperature steam electrolysis device 13.

The hydrogen production system according to a fourth aspect is the hydrogen production system according to any one of the first aspect to the third aspect in which the high-temperature steam electrolysis device 13 further applies voltage higher than the OCV and lower than the electric potential at the thermal neutral point to the high-temperature steam electrolysis cell 51 to electrolyze the steam and produce hydrogen. Due to this, a use amount of electric energy can be reduced, and energy cost can be reduced.

The hydrogen production system according to a fifth aspect is the hydrogen production system according to any one of the first aspect to the fourth aspect in which the steam having the number of moles equal to or larger than the number of moles required for producing hydrogen is further supplied to the high-temperature steam electrolysis device 15. Due to this, the steam utilization rate in the high-temperature steam electrolysis device 15 is lowered, and lowering of the hydrogen production amount can be suppressed.

The hydrogen production system according to a sixth aspect is the hydrogen production system according to any one of the first aspect to the fifth aspect in which the high-temperature steam electrolysis device 15 further includes the electrolyte layer 51a, the porous hydrogen electrode layer 51b, and the porous oxygen electrode layer 51c. The heating device 14 heats the porous hydrogen electrode layer 51b by the steam, and heats the porous oxygen electrode layer 51c by at least one of the steam and the heated air. Due to this, the high-temperature steam electrolysis device 15 can be efficiently heated.

The hydrogen production system according to a seventh aspect is the hydrogen production system according to any one of the first aspect to the sixth aspect in which the heating device 14 controls at least one of the flow rate of the steam and the flow rate of the secondary helium so that the operating temperature of the high-temperature steam electrolysis device 13 reaches the assumed temperature, and the temperature of the steam supplied to the high-temperature steam electrolysis device 13 becomes higher than the operating temperature of the high-temperature steam electrolysis device 15. Due to this, the heating device 14 can appropriately heat the high-temperature steam electrolysis device 13.

The hydrogen production system according to an eighth aspect is the hydrogen production system according to any one of the first aspect to the seventh aspect in which the high-temperature gas cooled reactor is disposed as the heat source 11 that can generate thermal energy, and the heat exchanger 12 heats the steam by using the heating medium that is heated by the thermal energy of high-temperature helium generated in the high-temperature gas cooled reactor. Due to this, a generation amount of carbon dioxide can be reduced.

The hydrogen production method according to a ninth aspect includes a step of generating thermal energy at 600°C or higher, a step of superheating the steam to 600°C or higher by using the secondary helium (heating medium) heated by the thermal energy, a step of heating the high-temperature steam electrolysis cell 51 by the steam, and a step of electrolyzing the steam to produce hydrogen by applying, to the high-temperature steam electrolysis cell 51, voltage lower than the electric potential at the thermal neutral point at which Joule heating caused by application of a current and heat absorption caused by electrolysis reaction are balanced. Due to this, it is possible to suppress generation of carbon dioxide by reducing a use amount of electric energy generated by a thermal power generation system and the like, and energy cost can be reduced.

Reference Signs List

    10, 10A, 10B Hydrogen production system
    11 Heat source
    12 Heat exchanger
    13 High-temperature steam electrolysis device
    14 Heating device
    21 Intermediate heat exchanger
    22 Supply header
    23 Return header
    24 Circulator
    31 Steam generator
    32 First heat exchanger
    33 Second heat exchanger
    34 Heat exchanger on hydrogen side
    35 Heat exchanger on oxygen side
    36, 38 Heat recovery unit
    37, 39 Capacitor
    41 Circulator
    51 High-temperature steam electrolysis cell
    51a Electrolyte layer
    51b Porous hydrogen electrode layer
    51c Porous oxygen electrode layer

61, 62, 63, 64 Flow rate regulating valve
65 Temperature regulator on hydrogen side
66 Temperature regulator on oxygen side
67 Temperature sensor
71 Steam header
72 Check valve
L11 Circulation path
L12 Supply path
L13 Return path
L14, L15, L16, L17, L18 Heating medium supply path
L31 Water supply path
L32 First steam supply path
L33 Second steam supply path
L34 Steam supply path on hydrogen side
L35 Hydrogen gas discharge path
L36 Circulation path
L41, L42 Gas supply path
L43 Steam supply path on oxygen side
L44 Oxygen gas discharge path
L45 Circulation path
L51 Power supply path
L71 Steam branch path on hydrogen side
L72 Steam branch path on oxygen side

**Claims**

1. A hydrogen production system comprising:

   a heat exchanger that heats, when a heating medium is heated by thermal energy at 600°C or higher, steam by using the heated heating medium; and
   a high-temperature steam electrolysis device that electrolyzes the steam at 600°C or higher to produce hydrogen by applying, to a high-temperature steam electrolysis cell, a voltage lower than a voltage at a thermal neutral point at which Joule heating caused by application of a current and heat absorption caused by electrolysis reaction are balanced such that heat balance becomes 0.

2. The hydrogen production system according to claim 1, wherein the heat exchanger includes a first heat exchanger disposed on a steam supply path, and a second heat exchanger disposed on a downstream side with respect to the first heat exchanger on the steam supply path.

3. The hydrogen production system according to claim 1 or 2, wherein the heat exchanger heats the high-temperature steam electrolysis device by the steam at a temperature higher than an operating temperature of the high-temperature steam electrolysis device.

4. The hydrogen production system according to claim 1, wherein the heat exchanger compensates for thermal energy that is lost by endothermic reaction when the high-temperature steam electrolysis device produces hydrogen.

5. The hydrogen production system according to claim 1, wherein the high-temperature steam electrolysis device electrolyzes the steam to produce hydrogen by applying a voltage higher than OCV and lower than the voltage at the thermal neutral point to the high-temperature steam electrolysis cell.

6. The hydrogen production system according to claim 1, wherein steam having number of moles equal to or larger than number of moles required for producing hydrogen is supplied to the high-temperature steam electrolysis device.

7. The hydrogen production system according to claim 1, wherein the high-temperature steam electrolysis device includes an electrolyte layer, a hydrogen gas diffusion electrode layer, and an oxygen gas diffusion electrode layer, and the heat exchanger heats the hydrogen gas diffusion electrode layer by the steam and heats the oxygen gas diffusion electrode layer by at least one of the steam and heated air.

8. The hydrogen production system according to claim 1, wherein the heat exchanger controls at least one of a flow rate of the steam and a flow rate of the heating medium so that a temperature of the steam supplied to the high-temperature steam electrolysis device is higher than an operating temperature of the high-temperature steam electrolysis device.

9. The hydrogen production system according to claim 1, wherein a high-temperature gas cooled reactor is disposed as a heat source that is able to generate the thermal energy, and the heat exchanger heats steam by using a heating medium heated by thermal energy of high-temperature helium generated in the high-temperature gas cooled reactor.

10. A hydrogen production method comprising the steps of:

generating thermal energy at 600°C or higher;
superheating steam to 600°C or higher by using a heating medium heated by the thermal energy;
heating a high-temperature steam electrolysis cell by the steam; and
electrolyzing the steam to produce hydrogen by applying, to the high-temperature steam electrolysis cell, a voltage lower than a voltage at a thermal neutral point at which Joule heating caused by application of a current and heat absorption caused by electrolysis reaction are balanced such that heat balance becomes 0.

FIG.1

# FIG.2

# FIG.3

# FIG.4

# FIG.5

INFLUENCE FROM OXYGEN PARTIAL PRESSURE
ON OXYGEN ELECTRODE SIDE ON ELECTROLYTIC CURRENT

LOW OXYGEN
PARTIAL PRESSURE

HIGH OXYGEN
PARTIAL PRESSURE

STEAM IS
RICH

STEAM IS ZERO

HEATING MEDIUM IS
ZERO

CURRENT

NITROGEN
+OXYGEN
+STEAM IS
RICH

NITROGEN+OXYGEN
(STEAM IS ZERO)

OXYGEN
(NITROGEN AND
STEAM ARE ZERO)

TIME

# FIG.6

| STEAM UTILIZATION RATE | $P_{H2}$ | $P_{O2}$ | $P_{H2O}$ | OCV[V] | DIFFERENCE FROM 1.1 V |
|---|---|---|---|---|---|
| 10% | 0.1 | 0.21 | 0.9 | 0.86 | 0.24 |
| 20% | 0.2 | 0.21 | 0.8 | 0.90 | 0.20 |
| 40% | 0.4 | 0.21 | 0.6 | 0.94 | 0.16 |
| 60% | 0.6 | 0.21 | 0.4 | 0.98 | 0.12 |
| 80% | 0.8 | 0.21 | 0.2 | 1.02 | 0.08 |

# FIG.7

TEMPERATURE CHANGE OF STEAM AT HYDROGEN ELECTRODE

# FIG.8

EP 4 512 932 A1

FIG.9

## INTERNATIONAL SEARCH REPORT

| International application No. |
|---|
| **PCT/JP2023/033508** |

### A. CLASSIFICATION OF SUBJECT MATTER

*C25B 1/042*(2021.01)i; *C25B 9/00*(2021.01)i; *C25B 15/021*(2021.01)i
FI:   C25B1/042; C25B9/00 A; C25B15/021

According to International Patent Classification (IPC) or to both national classification and IPC

### B. FIELDS SEARCHED

Minimum documentation searched (classification system followed by classification symbols)

C25B1/042; C25B9/00; C25B15/021

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | US 2008/0137797 A1 (GENERAL ELECTRIC COMPANY) 12 June 2008 (2008-06-12)<br>fig. 2-3, paragraphs [0001], [0008], [0024], [0026], [0034]-[0039], [0047], [0056] | 1-10 |
| Y | JP 2015-505344 A (COMMISSARIAT A L'ENERGIE ATOMIQUE ET AUX ENERGIESALTERNATIVES) 19 February 2015 (2015-02-19)<br>paragraphs [0031], [0032], [0037], fig. 5 | 1-10 |
| Y | US 2011/0131991 A1 (BATTELLE ENERGY ALLIANCE, LLC) 09 June 2011 (2011-06-09)<br>fig. 1, 3, paragraphs [0016]-[0017], [0036]-[0043] | 7-9 |
| Y | JP 4-320999 A (ISHIKAWAJIMA HARIMA HEAVY IND CO LTD) 11 November 1992 (1992-11-11)<br>fig. 1 | 9 |
| Y | JP 2002-47591 A (JAPAN ATOMIC ENERGY RES INST) 15 February 2002 (2002-02-15)<br>fig. 7, paragraph [0031] | 9 |
| A | JP 2022-143131 A (KABUSHIKI KAISHA TOYOTA CHUO KENKYUSHO) 03 October 2022 (2022-10-03)<br>paragraph [0036] | 1 |

☑ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 November 2023** | **28 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2023/033508** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2018-513915 A (ELECTRICITE DE FRANCE) 31 May 2018 (2018-05-31) paragraph [0083] | 1 |
| A | CN 113862696 A (SICHUAN HUANENG HYDROGEN ENERGY TECHNOLOGY CO., LTD.) 31 December 2021 (2021-12-31) paragraph [0067] | 1 |

Form PCT/ISA/210 (second sheet) (January 2015)

INTERNATIONAL SEARCH REPORT
Information on patent family members

International application No.

**PCT/JP2023/033508**

| Patent document cited in search report | | | Publication date (day/month/year) | Patent family member(s) | | | Publication date (day/month/year) |
|---|---|---|---|---|---|---|---|
| US | 2008/0137797 | A1 | 12 June 2008 | US | 2009/0122943 | A1 | |
| JP | 2015-505344 | A | 19 February 2015 | US | 2015/0004510 | A1 | |
| | | | | paragraphs [0028], [0029], [0032] | | | |
| | | | | KR | 10-2014-0114021 | A | |
| | | | | FR | 2985522 | A1 | |
| | | | | WO | 2013/104667 | A1 | |
| US | 2011/0131991 | A1 | 09 June 2011 | WO | 2009/079462 | A2 | |
| JP | 4-320999 | A | 11 November 1992 | (Family: none) | | | |
| JP | 2002-47591 | A | 15 February 2002 | (Family: none) | | | |
| JP | 2022-143131 | A | 03 October 2022 | (Family: none) | | | |
| JP | 2018-513915 | A | 31 May 2018 | WO | 2016/146956 | A1 | |
| | | | | specification, pp. 16-17 | | | |
| | | | | CN | 107534171 | A | |
| | | | | FR | 3033943 | A1 | |
| CN | 113862696 | A | 31 December 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020041202 A